Europäisches Patentamt

European Patent Office

Office européen des brevets

(11) Numéro de publication: **0 286 489 B1**

## (12) FASCICULE DE BREVET EUROPEEN

(45) Date de publication de fascicule du brevet: **04.11.92** (51) Int. Cl.⁵: **H04L 9/30**

(21) Numéro de dépôt: **88400670.1**

(22) Date de dépôt: **21.03.88**

(54) **Procédé et contrôleur pour cryptographier un message selon un algorithme à clé publique.**

(30) Priorité: **10.04.87 FR 8705144**

(43) Date de publication de la demande:
**12.10.88 Bulletin 88/41**

(45) Mention de la délivrance du brevet:
**04.11.92 Bulletin 92/45**

(84) Etats contractants désignés:
**DE GB IT**

(56) Documents cités:
**EP-A- 0 239 749**

**PROCEEDINGS OF THE TWENTY-FIFTH IEEE
COMPUTER SOCIETY INTERNATIONAL
CONFERENCE, Washington, D.C., 20-23 septembre 1982, pages 672-678, IEEE, New York,
US; S. MIYAGUCHI: "Fast encryption algorithm for the RSA cryptographic system"**

(73) Titulaire: **Pailles, Jean-Claude
4, rue des Loisirs
F-14610 Epnon(FR)**

Titulaire: **Boudet, François
18, Place Champlain
F-14000 Caen(FR)**

(72) Inventeur: **Pailles, Jean-Claude
4, rue des Loisirs
F-14610 Epnon(FR)**
Inventeur: **Boudet, François
18, Place Champlain
F-14000 Caen(FR)**

(74) Mandataire: **Cabinet Martinet & Lapoux
BP 405
F-78055 Saint Ouentin en Yvelines
Cédex(FR)**

Rank Xerox (UK) Business Services

## Description

La présente invention concerne de manière générale la confidentialité et l'authentification de messages pour des systèmes électroniques de messagerie privée, de paiement ou de transferts de fonds. Plus particulièrement, l'invention concerne de tels systèmes électroniques traitant des messages à l'aide d'algorithmes cryptographiques à clé publique de type RSA (RIVEST, SHAMIR et ADLEMAN).

Dans l'article "on digital signatures and public key cryptosystems", Communication of the ACM, Vol. 21, Février 1978, No. 2, p. 120-121, Rivest, Shamir et Adleman divulguent un algorithme pour calculer une fonction cryptographique à clé publique F telle que $F(X) = X^S$ modulo N, où X et $F(X)$ sont des messages représentés sous forme de mots numériques ayant des valeurs entières élevées de l'ordre de $2^{512}$ et N et S sont des entiers également de l'ordre de $2^{512}$. Le calcul de l'exponentiation modulo N se réduit à une suite de calculs de type A.B modulo N, selon un processus de calcul itératif. Un procédé classique pour calculer la quantité A.B modulo N consiste à calculer le produit A.B puis à le diviser par N afin d'obtenir un reste recherché. Un tel procédé implique la nécessité de disposer de dispositifs de calcul pouvant traiter en parallèle un nombre de bit très élevé, de l'ordre de 1 024 dans le cas où l'on traite des nombres voisins de $2^{512}$. Un processeur de calcul réalisable en application de ce procédé a certes de bonnes performances mais présente un coût de revient élevé et un encombrement trop important pour certaines applications. Un processeur de calcul cryptographique réalisé selon ce procédé se présente généralement sous forme d'un boîtier de circuit intégré à adjoindre dans une carte électronique à un microprocesseur à 8 bits ou 16 bits afin de conférer à ce dernier des capacités de calcul cryptographique. Il est par exemple impossible d'encarter même sous forme de puce, ce processeur de calcul dans une carte dite "à mémoire".

Un autre procédé itératif pour calculer le résultat d'une opération [M.P modulo N] est proposé dans la EP-A-0239749. Cette demande de brevet bénéficie d'une date de priorité du 5 mars 1986 et a été publiée le 7 octobre 1987; en conséquence, cette demande de brevet est considérée comme comprise dans l'état de la technique conformément aux articles 54(3) et (4) et 89 de la CBE.

Selon la EP-A-0239749, le mot numérique M est décomposé en un polynôme binaire ayant pour élément itératif $M_{L-m} \cdot 2^{L-m}$, où L désigne le nombre de bits composant le mot M et L-m le poids d'un bit compris entre L-1 pour le bit de poids fort (MSB) et 0 pour le bit de poids faible (MLB). Le produit M.P est obtenu par des itérations $Z:= 2Z$ + $M_m P$, en faisant varier successivement m de L-1 à O, Z étant égal à zéro au début de la première itération. A chaque itération, le résultat intermédiaire est comparé à N et 2N afin de réduire l'opération modulo N à des opérations simples telles que multiplication et soustraction : si Z est inférieur à N, le résultat Z est inchangé; si Z est compris entre N et 2N, Z est changé en Z - N; et si Z est plus grand que 2N, Z est changé en Z - 2N. A la fin des L itérations, le résultat Z est le reste de l'opération [M.P modulo N].

Il apparaît que le nombre L d'itérations est d'autant plus grand que le nombre de bits dans le nombre M est élevé, et par suite nécessite une durée de calcul très long.

La présente invention vise à fournir un procédé de calcul pour cryptage ou décryptage d'un message selon lequel les itérations pour obtenir le résultat de l'opération [A.B modulo N] sont réduites par rapport à la technique antérieure. Cette réduction est fondée sur un fractionnement du mot A en tranches, ce qui permet d'optimiser la durée du calcul inhérente à une utilisation optimale de la longueur de mots binaires traités dans un microprocesseur. L'invention est également dirigée vers un contrôleur de faible encombrement et de faible coût mettant en oeuvre le procédé selon l'invention pour le calcul de la fonction cryptographique F, un tel contrôleur étant réalisable sous forme d'une unique puce intégrant un microprocesseur apte à gérer un système, et une cellule de calcul spécialisée.

A cette fin, le procédé selon l'invention pour crypter ou décrypter un message est tel que défini dans la revendication 1.

Un contrôleur selon l'invention pour la mise en oeuvre du procédé selon l'invention est caractérisé en ce qu'il comprend des moyens pour mémoriser un programme de calcul de l'exponentiation modulo N d'un mot numérique de message, des moyens pour gérer l'exécution du calcul selon le programme mémorisé et commander un système électronique incluant ledit contrôleur, et des moyens pour calculer à la demande des moyens pour gérer et pour commander des opération du type $T \pm y.N$, où y est un mot numérique $a_i$ ou $d_i$.

De préférence, les moyens pour calculer comprennent des moyens pour régir des échanges de données et d'adresses avec les moyens pour gérer et commander et pour séquencer des opérations internes réalisées dans les moyens pour calculer, chaque opération étant relative à une partie de l'un des mots N et T fractionné, des moyens pour multiplier le mot numérique y au mot N ou à une partie du mot N fractionné, des premiers moyens pour additionner un mot de retenue à un produit fourni par les moyens pour multiplier, des seconds moyens pour additionner le mot T ou une partie du mot T fractionné à un résultat délivré par les moyens pour additionner, et des moyens interconnectés aux premiers et seconds moyens pour additionner pour réaliser une inversion en complément à deux du résultat délivré par les premiers moyens pour additionner dans le cas où l'opération à réaliser est du type T - y.N.

Avec les technologies actuelles, telle que la technologie CMOS à 1,5 micron autorisant une fréquence d'horloge de l'ordre de 10 MHz, un contrôleur selon l'invention peut se présenter sous la forme d'une puce de 20 mm$^2$ de surface et présente un temps en signature de message voisin de 1 s.

D'autres avantages et caractéristiques de l'invention apparaîtront plus clairement à la lecture de la description suivante du procédé et de plusieurs réalisations préférées d'un contrôleur selon l'invention en référence aux dessins annexés correspondants dans lesquels :

- la Fig. 1 montre un organigramme de calcul de la fonction A.B modulo N;
- la Fig. 2 est un bloc-diagramme d'un contrôleur selon l'invention ; et
- la Fig. 3 est un bloc-diagramme d'une cellule de calcul incluse dans un contrôleur selon l'invention.

Le procédé selon l'invention est basé sur un calcul par tranche d'un nombre de bits tb $\geq$ 2 déterminé alternant des multiplications et des réductions modulo N. De plus, le nombre N est choisi de façon à simplifier la réduction modulo N afin de ne pas avoir à effectuer de vraies divisions mais des multiplications, soustractions et additions.

Les valeurs numériques de nombres sont indiquées ci-aprés à titre d'exemple.

Pour un calcul de A.B modulo N avec des nombres A et B ayant chacun un nombre de bits nb = 512, le nombre A est, par exemple, divisé en J + 1 = nb/tb = 32 tranches de tb = 16 bits. Le produit A.B s'exprime alors par la somme suivante :

$$A.B = a_0.B.2^0 + a_1.B.2^{1.tb} + ... + a_i.B.2^{i.tb} + ... + a_J.B.2^{J.tb},$$

où i est un entier compris entre 0 et J, et où $a_0$ à $a_J$ sont des tranches successives de tb = 16 bits du nombre A, à partir des bits de poids faible, telles que :

$$A = a_0.2^0 + a_1.2^{1.tb} + ... + a_i.2^{i.tb} + ... + a_J.2^{J.tb}.$$

L'expression A.B modulo M se décompose de la manière suivante :

$$A.B \text{ modulo } N = a_0 B.2^{0.tb} \text{ modulo } N + a_1.B.2^{1.tb} \text{ modulo } N + ... + a_i.B.2^{i.tb} \text{ modulo } N + ... +$$

$a_J.B.2^{J.tb}$ modulo N.

Le nombre M est choisi dans l'intervalle : [ $2^{nb}$, $2^{nb} + 2^{nb \cdot (tb + 1)}$ ] soit pour nb = 512 et tb = 16, [ $2^{512}$, $2^{512} + 2^{495}$ ]. Le choix de N est imposé dans cet intervalle afin de ramener les réductions modulo N à de simples soustractions.

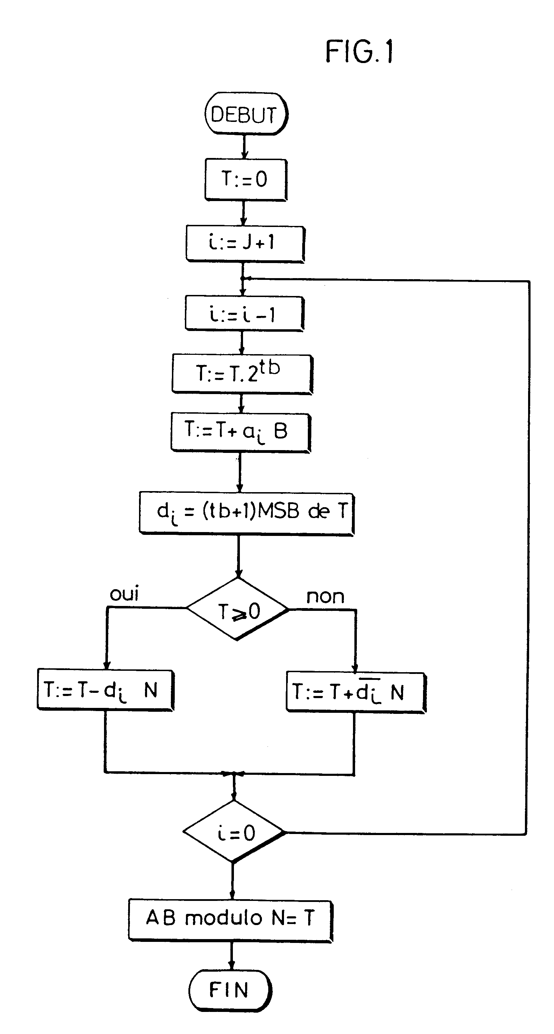

A la Fig. 1 est montré un organigramme de calcul de la fonction A.B modulo N selon le procédé de l'invention .

Une variable de calcul T de nb + tb + 1 = 529 bits en complément à deux est utilisée pour le calcul. A la variable T est attribuée une valeur initiale égale à 0. La variable T cumule les produits partiels $a_i.B$ au fur et à mesure du calcul. Une boucle de calcul est réalisée J + 1 fois avant que la valeur de la variable T soit égale à A.B modulo N.

Lors des J + 1 boucles de calcul sont calculés respectivement les J + 1 produits $a_J.B$ à $a_0.B$. A chaque passage dans une boucle de calcul, une nouvelle valeur de T est calculée par addition du produit $a_i.B$ correspondant à la valeur précédente de la variable T multipliée par $2^{tb} = 2^{16}$. A une autre variable de calcul $d_i$ est attribuée la valeur des tb + 1 = 17 bits de poids fort, (tb + 1) MSB, de la valeur calculée de la variable T. Le nombre N est multiplié par la variable $d_i$ afin de calculer un produit $d_i.N$ correspondant à la valeur de la variable T. Tout au long du calcul, à chaque fois que la valeur de la variable T excède le produit $d_i.N$ correspondant, la variable T est réduite modulo N par soustraction du produit $d_i.N$. Cette simplicité de la réduction modulo N de la variable T résulte du choix de N dans l'intervalle [ $2^{nb}$, $2^{nb} + 2^{nb \cdot (tb + 1)}$ ].

En effet, de manière générale, pour qu'une différence T - $d_i.N$ soit égale à T modulo N, il faut que les conditions T - $d_i.N \geq 0$ et T - $d_i.N \leq N$ soient vérifiées. Ces conditions sont effectivement vérifiées dans le cas où N appartient à l'intervalle :

$$[ 2^{nb}, 2^{nb} + 2^{nb \cdot (tb + 1)}]$$

Lorsque la différence T - $\bar{d}_i.N$ est de signe négatif, la valeur de T n'est pas réductible modulo N et le produit $d_i.N$ est ajouté à la différence T - $d_i.N$ pour retrouver la valeur de la variable T.

La mise en oeuvre du procédé selon l'invention implique de savoir faire des opérations du type CAL(T, y, N) = T $\pm$ y.N, où y est le mot $d_i$ ou $a_i$, les multiplications de la variable T par $2^{tb}$ pouvant être réalisées simplement par des opérations de décalage effectuées dans une unité centrale d'un contrôleur selon l'invention gérant un algorithme de calcul global de la fonction F. Il est intéressant, essentiellement pour des raisons de rapidité, de faire exécuter les opérations CAL(T, y, N) par une cellule de calcul spécialisée adjointe à l'unité centrale du contrôleur.

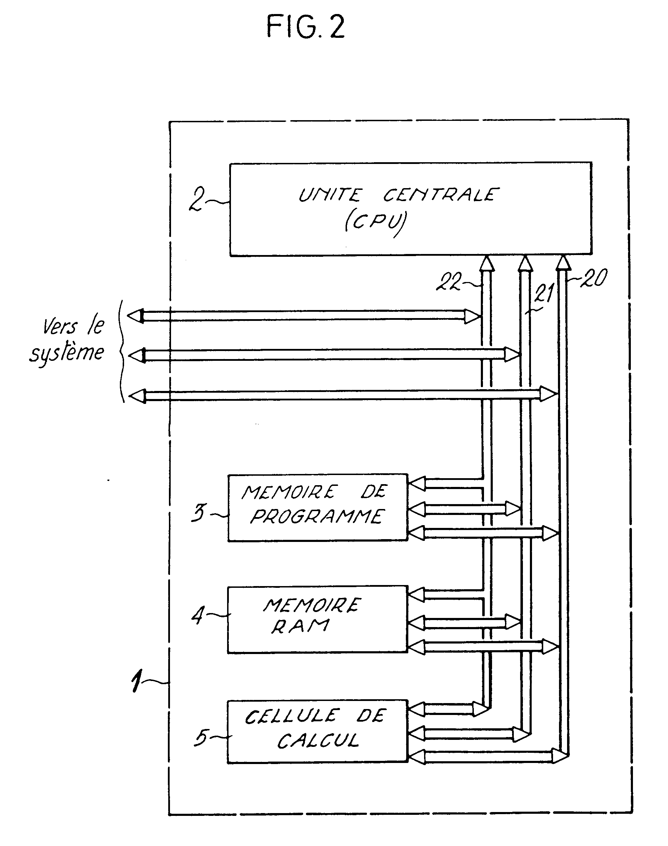

En référence à la Fig.2, le contrôleur 1 selon l'invention comprend une unité centrale 2, une mémoire de programme 3, une mémoire de travail 4 de type RAM, et une cellule de calcul 5.

L'unité centrale 2 est un microprocesseur connu, par exemple à 8 bits ou 16 bits. L'unité 1 est reliée par des bus 20, 21 et 22 aux mémoires 3 et 4 à la cellule de calcul 5. Les bus 20, 21 et 22 sont respectivement des bus de donnée, d'adresse et de commande. Les bus 20, 21 et 22 sont par ailleurs, connectés directement ou à travers des ports de communication, à différents éléments d'un système que gère le contrôleur.

La mémoire de programme 3 est composée de circuits de mémoire de type ROM et EPROM (ou E2PROM). La mémoire 3 mémorise de manière classique un programme ou une partie d'un programme afin de commander le fonctionnement du système dont fait partie le contrôleur 1. Dans la mémoire 3 est également mémorisé un sous-programme et des paramètres relatifs au calcul de la fonction cryptographique F par l'unité centrale 2 et la cellule de calcul 5.

La cellule de calcul 5 est utilisée par l'unité centrale 2 pour calculer les opérations CAL(T, y, N).

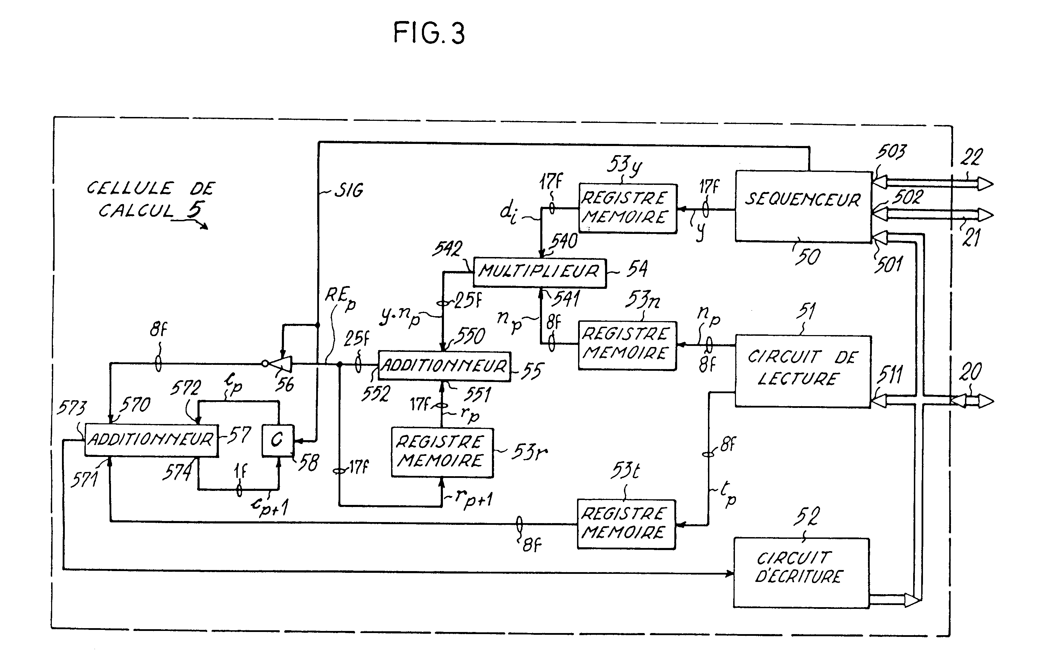

Une cellule de calcul 5 pour un calcul octet par octet des opérations CAL(T, y, N) est représentée à la Fig.3.

La cellule 5 comprend un séquenceur 50, un circuit de lecture 51 et un circuit d'écriture 52 tous deux connectés au bus de donnée 20, des registres-mémoires 53y, 53n, 53t et 53r, un multiplieur 54, un premier additionneur 55, un circuit d'inversion logique 56, un second additionneur 57, et une mémoire de retenue 58.

Le séquenceur 50 gère l'ensemble de la cellule 5 ; il délivre aux différents circuits composant la cellule 5 des signaux de commande de séquencement ainsi que des données nécessaires aux déroulement des opérations de calcul. Le séquenceur 50 est connecté au bus de donnée 20, d'adresse 21, et de commande 22 respectivement à des entrées parallèles 501, 502 et 503.

Préalablement au début d'une opération CAL(T, y, N) l'unité centrale 2 écrit dans la mémoire 4, sous forme d'octets, à des adresses consécutives, la variable T et le nombre N. La variable T et le nombre N sont constitués d'octets $t_0$ à $t_P$ et $n_0$ à $n_Q$ mémorisés dans la mémoire 4 respectivement à des adresses consécutives $at_0$ à $at_P$ et $an_0$ à $an_Q$, où P est un entier positif variable inférieur à 66 et Q est un entier égal à 63 pour T et N représentés par nb + tb + 1 = 529 bits maximum et nb = 512 bits, respectivement. Les octets $t_0$ et $n_0$ sont les octets de poids faible de T et de N respectivement ; les octets $t_P$ et $n_Q$ sont les octets de poids fort de T et N respectivement.

Lorsqu'une opération CAL(T, y, N) est commandée par l'unité centrale 2, via le bus de commande 22, le séquenceur 50 reçoit de l'unité 2, aux entrées de donnée 501, la valeur de la variable y, un bit SIG indiquant le signe + ou - de l'opération CAL à effectuer, le nombre P + 1 d'octets composant la variable T, ainsi que les deux adresses $at_0$ et $an_0$ respectivement du premier octet de poids faible $t_0$ de la variable T et du premier octet de poids faible $n_0$ du nombre N. La variable y, représentée sur tb + 1 = 17 bits, est chargée par le séquenceur 50 dans le registre-mémoire 53y. Le registre-mémoire 53y est un registre parallèle de tb + 1 = 17 bits. Les adresses $at_0$ et $an_0$ sont chargées dans des compteurs d'adressage du séquenceur 50. Le nombre d'octets P + 1 de la variable T est chargé dans un compteur de boucle. Le séquenceur 50 adresse successivement les octets $t_0$ et $n_0$ en délivrant dans le bus d'adresse 21 les adresses $at_0$ et $an_0$. Les octets $t_0$ et $n_0$ sont transmis par la mémoire 4 dans le bus de donnée 20 à la réception des adresses $at_0$ et $an_0$ respectivement, et de signaux de commande fournis via le bus 22. Le séquenceur 50 a accès à la mémoire 4 en lecture et en écriture selon le mode d'accès connu DMA (direct memory access). Les adresses $at_0$ et $an_0$ sont incrémentées dans les compteurs d'adressage du séquenceur 50 à chaque fois qu'il convient de charger dans la cellule 5 deux nouveaux octets $t_p$ et $n_p$, où p est un entier positif au maximum égal à P, afin de poursuivre octet par octet le calcul de l'opération CAL(T, y, N) en cours.

Les octets $t_p$, $n_p$ sont reçus dans la cellule 5 à des entrées parallèles 511 du circuit de lecture 51. Un octet $t_p$ est chargé par le circuit 51 dans le registre-mémoire 53t ; un octet $n_p$ est chargé par le circuit 51 dans le registre-mémoire 53n. Les registres-mémoires 53t et 53n sont des registres parallèles de 8 bits ; ils mémorisent les octets $t_p$ et $n_p$ pendant la durée nécessaire aux opérations de calcul.

Le multiplieur 54 est un multiplieur de type connu à 8 + (nb + 1) = 25 bits ; il reçoit respectivement à des première et seconde entrées parallèles 540 et 541 la variable y à nb + 1 = 17 bits et l'octet $n_p$ contenus dans les registres-mémoires 53y et 53n. Le produit $y.n_p$ est fourni par le multiplieur 54, via des sorties parallèles 542, à des premières entrées parallèles 550 de l'additionneur 55.

L'additionneur 55 est un additionneur de type connu à 25 bits. L'additionneur 55 a pour fonction d'ajouter au produit $y.n_p$ un mot de retenue $r_p$ de 17 bits mémorisé lors d'opérations de calcul relatives aux octets $n_{p-1}$ et $t_{p-1}$ traités au cours du cycle précédent. La retenue $r_p$ est mémorisée dans le registre-mémoire 53r qui la fournit à des secondes entrées parallèles 551 de l'additionneur 55. A des sorties parallèles 552, l'additionneur 55 délivre la somme $r_p$ + $y.n_p$ représentée sur 25 bits.

Les 17 bits de poids forts de la somme $r_p$ + $y.n_p$ sont chargés dans le registre-mémoire 53r et constituent le mot de retenue $r_{p+1}$ qui sera ajouté au produit suivant $y.n_{p+1}$. Le mot de retenue $r_O$ à ajouter à un premier produit $y.n_O$ est initialisé à 0 par le séquenceur 5, lors d'une phase d'initialisation. Les 8 bits restants de poids faible de la somme $r_p$ + $y.n_p$ représentent un résultat $RE_p$ de l'opération à ajouter ou à soustraire à l'octet $t_p$.

Lorsque la cellue 5 réalise une opération CAL(T,y,N) = T - y.N, le résultat $RE_p$ de la somme $r_p$ + $y.n_p$ est à inverser en complément à deux avant d'être ajouté à l'octet $t_p$. Le séquenceur 50 active dans ce cas un circuit d'inversion logique 56 en lui fournissant lors de la phase d'initialisation le bit indicateur de signe SIG à un état déterminé. Le résultat $RE_p$ est fourni à travers le circuit d'inversion 56, actif ou inactif selon le signe de l'opération CAL en cours, à des premières entrées parallèles 570 d'un additionneur 57. L'additionneur 57 reçoit à des secondes entrées parallèles 571 l'octet $t_p$ mémorisé dans le registre-mémoire 53t. Un bit de retenue $c_p$ de l'opération précédente $t_{p-1}$ + - $RE_{p-1}$ est délivré par une mémoire 58 à une entrée de retenue 572 de l'additionneur 57. Lors de la phase d'initialisation, le bit de retenue $c_O$ dans la mémoire 58 est forcé par le bit SIG à l'état "1" ou "0" selon qu'une opération CAL(T, y, N) = T - y.N ou CAL(T, y, N) = T + y.N est à effectuer. L'additionneur 57 délivre à des sorties parallèles 573 le résultat de la somme $t_p$ + $RE_p$ + $c_p$ et à une sortie de retenue 574 le bit de retenu $c_{p+1}$ pour le calcul suivant. Le bit de retenue $c_{p+1}$ est mémorisé dans la mémoire 58. Le résultat délivré par l'additionneur 57 est fournit via le circuit d'écriture 52 dans le bus de donnée 20 lorsque le séquenceur 50 commande son écriture dans la mémoire 4 à l'adresse at $_{p+1}$. Le séquenceur 50 incrémente ensuite les compteurs d'adressage pour obtenir les adresses $at_{p+1}$ et $an_{p+1}$ des octets suivants à traiter et décrémente le compteur de boucle contenant à l'origine le nombre P + 1 d'octets composant la variable T. Lorsque le contenu du compteur de boucle atteint à la suite d'une décrémentation la valeur 0, le calcul de l'opération CAL(T, y, N) est terminé et le séquenceur 50 en informe l'unité centrale 2 via le bus de commande 22. L'unité centrale prend alors le contrôle des bus et lit aux adresses $at_O$ à $at_p$ le résultat de l'opération CAL(T, y, N) qu'elle a soustraité par la cellule de calcul 5.

**Revendications**

1. Procédé pour crypter ou décrypter un message représenté sous la forme d'un mot numérique (X) ayant une valeur entière élevée ($2^{512}$) par le calcul d'une exponentiation modulo N dudit message (F(X)), N étant un entier, l'exponentiation modulo N étant calculée en effectuant une suite d'opérations A.B modulo N, où A et B sont des variables de calcul ayant des valeurs entières dépendantes de la valeur numérique du message et représentées par des mots numériques de nb bits, nb étant un entier prédéterminé, caractérisé en ce que pour effectuer chacune des opérations A.B modulo N, la variable A est fractionnée en J + 1 mots de tb bits, $a_0,....a_i,....a_J$, où tb est un entier prédéterminé supérieur à 1, N un entier ayant une valeur numérique comprise dans l'intervalle [ $2^{nb}$, $2^{nb} + 2^{nb-(tb+1)}$], et J + 1 un entier égal ou immédiatement supérieur à nb/tb, en ce que successivement chacun des mots $a_i$, où i est un entier compris entre 0 et J, est multiplié par la variable B et le produit de la multiplication est ajouté à un mot numérique de somme T de valeur égale à la somme cumulée des produits antérieurs réduite modulo N, et en ce que la réduction modulo N du mot de somme T est réalisée en lui soustrayant une quantité $d_i.N$, où $d_i$ est un mot numérique constitué des tb + 1 bits de poids fort du mot de somme T, à chaque fois qu'il atteint une valeur supérieure ou égale à ladite quantité $d_i.N$.

2. Contrôleur pour la mise en oeuvre du procédé conforme à la revendication 1, caractérisé en ce qu'il comprend :

des moyens (3) pour mémoriser un programme de calcul de l'exponentiation modulo N (F(X)) d'un mot numérique de message (X),

des moyens (2,3,4) pour gérer l'exécution du calcul selon le programme-mémorisé et commander un système électronique incluant ledit contrôleur (1),et

des moyens (5) pour calculer à la demande des moyens pour gérer et pour commander (2,3,4) des opérations du type T ± y.N. où y est un mot numérique $a_i$ ou $d_i$.

3. Contrôleur conforme à la revendication 2, caractérisé en ce que des moyens pour gérer et pour commander comprennent un microprocesseur à 8 bits ou 16 bits.

4. Contrôleur conforme à la revendication 2 ou 3, caractérisé en ce que les moyens pour calculer (5) comprennent :

des moyens (50, 51, 52) pour régir des échanges de données et d'adresses avec les moyens pour gérer et commander (2, 3, 4) et pour séquencer des opérations internes réalisées dans les moyens pour calculer (5), chaque opération étant relative à une partie de l'un des mois N et T fractionné,

des moyens (54) pour multiplier le mot numérique y au mot N ou à une partie ($n_p$) du mot N fractionné ($n_O$ à $n_Q$),

des premiers moyens (55, 53r) pour additionner un mot de retenue ($r_p$) à un produit ($y.n_p$) fourni par les moyens pour multiplier (54),

des seconds moyens (57) pour additionner le mot T ou une partie ($t_p$) du mot T fractionné ($t_O$ à $t_p$) à un résultat ($RE_p$) délivré par les premiers moyens pour additionner (55, 53r), et

des moyens (56) interconnectés aux premiers et seconds moyens pour additionner pour réaliser une inversion en complément à deux du résultat ($RE_p$) délivré par les premiers moyens pour additionner (55, 53r) dans le cas où l'opération à réaliser est du type T - y.N.

5. Contrôleur conforme à la revendication 4, caractérisé en ce que les mots T et/ou N sont fractionnés an des mots de 8 bits ou 16 bits.

## Claims

1. A method of encoding or decoding a message in the form of a digital word (X) having a high integral value ($2^{512}$) by calulating a modulo N exponentiation of the message (F(X)), N being an integer, the modulo N exponentiation being calculated via a series of A.B modulo N operations, where A and B are computing variables having integral values depending on the digital value of the message and are represented by digital words of nb bits, nb being a given integer, characterised in that in order to carry out each of the A.B modulo N operations, the variable A is split into $J+1$ words of tb bits, $a_0,...a_i,...a_j$, where tb is a given integer greater than unity, N is an integer having a digital value in the range $[2^{nb}, 2^{nb}+2^{nb-(tb+1)}]$, and $J+1$ is an integer equal to or immediately above nb/tb, each of the words $a_i$ where i is an integer between 0 and J is multiplied by the variable B and the product is added to a digital sum word T equal in value to the total sum of the previous products reduced modulo N, and the modulo N reduction of the sum word T is brought about by subtracting a quantity $d_i$ or N, where $d_i$ is a digital word made up of tb + 1 heavy-weight bits of the sum word T, whenever it reaches a value greater than or equal to the aforementioned quantity $d_i$ .N.

2. A controller for working the method according to claim 1, characterised in that it comprises:
means (3) for storing a program for calculating the modulo N (F(X)) exponentiation of a digital message word (X),
means (2, 3, 4) for managing the calculation in accordance with the stored program and controlling an electronic system including the controller (1), and
means (5) which, on demand by the managing and control means (2, 3, 4), calculate type T ± y.N operations, where y is a digital word $a_i$ or $d_i$.

3. A controller according to claim 2, characterised in that the managing and control means comprise an 8-bit or 16-bit microprocessor.

4. A controller according to claim 2 or 3, characterised in that the computing means (5) comprise:
means (50, 51, 52) for controlling exchanges of data and addresses with the managing and control means (2, 3, 4) and for sequencing internal operations performed in the computing means (5), each operating relating to a part of one of the split words N and T,
means (54) for multiplying the digital word y by the word N or by a part ($n_p$) of the split word N ($n_o$ to $n_Q$),
first means (55, 53r) for adding a carry word ($r_p$) to a product ($y.n_p$) supplied by the multiplying means (54),
second means (57) for adding the word T or a part ($t_p$) of the split word T ($t_o$ to $t_p$) to a result ($RE_p$) delivered by the first adding means (55, 53r), and
means (56) interconnected to the first and second adding means in order to obtain a two's complement inversion of the result ($RE_p$) delivered by the first adding means (55, 53r) in the case where the required operation is type T - y.N.

5. A controller according to claim 4, characterised in that the words T and/or N are split into 8-bit or 16-bit words.

## Patentansprüche

1. Verfahren zur Verschlüsselung oder Entschlüsselung einer in Form eines digitalen Wortes (X), das einen hohen ganzzahligen Wert ($2^{512}$) aufweist, dargestellten Nachricht durch die Berechnung einer Exponenzierung modulo N der Nachricht (F(X)), wobei N eine ganze Zahl ist, wobei die Exponenzierung modulo N berechnet wird, indem eine Folge von Operationen A.B modulo N ausgeführt wird, wobei A und B Berechnungsvariable sind, die vom digitalen Wert der Nachricht abhängige und durch digitale Worte mit nb Bits dargestellte ganzzahlige Werte aufweisen, wobei nb eine vorbestimmte ganze Zahl ist, dadurch **gekennzeichnet,** daß die Variable A zur Ausführung jeder der Operationen A.B modulo N in J + 1 Wörter mit tb Bits, $a_0, ... a_i, ... a_J$, zerlegt wird, wobei tb eine vorbestimmte ganze Zahl größer als 1, N eine ganze Zahl, aufweisend einen digitalen Wert enthalten im Intervall $[2^{nb}, 2^{nb} + 2^{nb-(tb + 1)}]$, und J + 1 eine ganze Zahl gleich oder unmittelbar größer als nb/tb ist, daß aufeinanderfolgend jedes der Wörter $a_i$, wobei i eine ganze Zahl enthalten zwischen 0 und J ist, mit der Variablen B multipliziert wird und das Produkt der Multiplikation zu einem digitalen Summenwort T mit Wert gleich der kumulierten Summe der vorhergehenden Produkte, reduziert modulo N, hinzugefügt wird, und daß die Reduktion Mudulo N des Summenwortes T ausgeführt wird, indem von ihm jedesmal eine Größe $d_i.N$ subtrahiert wird, wobei $d_i$ ein aus tb + 1 hochwertigen Bits des Summenwortes T gebildetes digitales Wort ist, wenn es einen Wert größer oder gleich der Größe $d_i.N$ erreicht.

2. Steuereinheit zur Ausführung des Verfahrens nach Anspruch 1, dadurch **gekennzeichnet,** daß sie umfaßt:
   - Mittel (3) zur Speicherung eines Berechnungsprogramms zur Exponenzierung modulo N (F(X)) eines digitalen Nachrichtenwortes (X),
   - Mittel (2, 3, 4) zum Leiten der Ausführung der Berechnung gemäß dem gespeicherten Programm und zur Steuerung eines elektronischen Systems, das die Steuereinheit (1) enthält, und
   - Mittel (5), um auf Anforderung der Mittel zum Leiten und zum Steuern (2, 3, 4) Operationen des Typs T ± y. zu berechnen, wobei y ein digitales Wort $a_i$ oder $d_i$ ist.

3. Steuereinheit nach Anspruch 2, dadurch **gekennzeichnet,** daß die Mittel zum Leiten und zum Steuern einen Mikroprozessor mit 8 Bits oder 16 Bits umfassen.

4. Steuereinheit nach Anspruch 2 oder 3, dadurch **gekennzeichnet,** daß die Mittel zum Berechnen (5) umfassen:
   - Mittel (50, 51, 52) zum Regeln der Daten- und Adressenaustausche mit den Mitteln zum Leiten und Steuern (2, 3, 4) und zur Befehlsgabe der internen Operationen, die in den Mitteln zum Berechnen (5) ausgeführt werden, wobei jede Operation sich auf einen Teil eines der zerlegten Wörter N und T bezieht,
   - Mittel (54) zum Multiplizieren des digitalen Wortes y mit dem Wort N oder einem Teil $n_p$ des zerlegten Wortes N ($n_o$ bis $n_Q$),
   - erste Mittel (55, 53r) zum Addieren eines Übertragwortes ($r_p$) zu einem durch die Mittel zum Multiplizieren (54) gelieferten Produkt ($y.n_p$),
   - zweite Mittel (57) zum Addieren des Wortes T oder eines Teils ($t_p$) des zerlegten Wortes T ($t_o$ bis $t_p$) zu einem durch die ersten Mittel zum Addieren (55, 53r) gelieferten Resultat ($RE_p$) und
   - Mittel (56), die mit den ersten und zweiten Mitteln zum Addieren zusammengeschaltet sind, um eine Inversion im Zwei-Komplement des durch die ersten Mittel zum Addieren (55, 53r) gelieferten Resultates ($RE_p$) in dem Fall auszuführen, in dem die auszuführende Operation vom Typ T - y.N ist.

5. Steuereinheit nach Anspruch 4, dadurch **gekennzeichnet,** daß die Wörter T und/oder N in 8 Bit-oder 16 Bit-Wörter zerlegt werden.

## FIG.1

DEBUT

$T := 0$

$i := J+1$

$i := i-1$

$T := T.2^{tb}$

$T := T + a_i\ B$

$d_i = (tb+1)MSB\ de\ T$

$T \geqslant 0$    oui    non

$T := T - d_i\ N$      $T := T + \overline{d_i}\ N$

$i = 0$

$A\ B\ modulo\ N = T$

FIN

# FIG. 2

Vers le système

UNITE CENTRALE (CPU)

MEMOIRE DE PROGRAMME

MEMOIRE RAM

CELLULE DE CALCUL

FIG.3